# EUROPÄISCHE PATENTSCHRIFT

(11) **EP 4 159 923 B1**
(45) Veröffentlichungstag und Bekanntmachung des Hinweises auf die Patenterteilung: **05.06.2024**
(21) Anmeldenummer: 21200171.3
(22) Anmeldetag: 30.09.2021
(51) Int. Cl.: E01C 19/48

(54) **STRASSENBAUMASCHINE MIT VERNEBLER**
ROAD CONSTRUCTION MACHINE WITH NEBULISER
FINISSEUSE ROUTIÈRE POURVUE DE NÉBULISEUR

(43) Veröffentlichungstag der Anmeldung: 05.04.2023
(73) Patentinhaber: Joseph Vögele AG, 67067 Ludwigshafen (DE)
(72) Erfinder: ERDTMANN, Bernhard, 68535 Edingen Neckarhausen (DE)
(74) Vertreter: Grünecker Patent- und Rechtsanwälte PartG mbB

(56) Entgegenhaltungen:
- EP-A1- 1 925 736
- EP-A1- 3 276 081
- EP-A1- 3 293 310
- JP-A- 2011 089 257
- US-A- 5 613 371

## Beschreibung

Die Erfindung bezieht sich auf eine Straßenbaumaschine in Form eines Straßenfertigers oder eines Beschickerfahrzeugs zum Versorgen eines Straßenfertigers.

Wenn mit Straßenfertigern oder Beschickerfahrzeugen für Straßenfertiger Asphalt eingebaut wird, hat dieser typischerweise Temperaturen von beispielsweise 160°C bis 180°C, um optimal verarbeitet werden zu können. Dies führt dazu, dass Bedienpersonal auf solchen Straßenbaumaschinen während der Arbeit recht hohen Temperaturen ausgesetzt sein kann. Erschwerend kommt hinzu, dass der Einbau des Straßenbelags auch im Sommer oder in Regionen mit ohnehin recht hohen Außentemperaturen stattfindet. Eine Klimatisierung ist unmöglich, solange die Bedienstände an der Straßenbaumaschine nicht in geschlossenen Kabinen angeordnet sind.

Aus der EP 3 276 081 B1 ist ein Straßenfertiger mit einer Zerstäubervorrichtung für Kühlmittel bekannt. Die Zerstäubervorrichtung hat jedoch bewusst keinerlei Auswirkung auf die Temperatur in der Umgebung des Bedienstands. Vielmehr soll der von der Zerstäubervorrichtung erzeugte Nebel des Kühlmittels maximal eine Höhe von 1,5m über dem Boden erreichen und hat den Zweck, Aerosole in Asphaltdämpfen gleich am Boden zu binden. Auf diese Weise soll der Bediener vor den aufsteigenden Aerosolen geschützt werden. Die Ausbreitung des Nebels oberhalb einer Höhe von 1,5m über dem Boden soll jedoch gezielt unterbleiben, da die EP 3 276 081 B1 ansonsten die Beeinträchtigung der Sicht für den Bediener befürchtet.

Die JP 2011 089257 A beschreibt weder einen Straßenfertiger noch ein Beschickerfahrzeug, sondern eine Walze oder einen Bagger, bei dem im Bereich eines Fahrersitzes aus Düsen Nebel erzeugt wird. Aus der US 5,613,371 A1 gehen ebenfalls weder ein Straßenfertiger noch ein Beschickerfahrzeug hervor, sondern ein Golf-Kart, bei dem im Bereich eines Fahrersitzes mittels Sprühdüsen ein Wassernebel erzeugt wird.

Die Aufgabe der vorliegenden Erfindung besteht darin, die Arbeit für einen Bediener auf einer Straßenbaumaschine angenehmer zu gestalten.

Diese Aufgabe wird gelöst durch eine Straßenbaumaschine mit den Merkmalen des Anspruchs 1. Vorteilhafte Weiterbildungen der Erfindung sind in den Unteransprüchen angegeben.

Erfindungsgemäß ist demnach ein Kühlsystem mit einem Tank zur Aufnahme des Kühlmittels und einer Spülvorrichtung zum Zerstäuben des Kühlmittels zu einem Nebel vorgesehen. Das Kühlsystem ist dazu eingerichtet, den Nebel im Bereich des Bedienstands zu erzeugen - d.h. in dem Raum, in dem sich der Bediener typischerweise während der Bedienung der Straßenbaumaschine befindet. Dies unterscheidet die Erfindung vom Stand der Technik, in dem der Nebel ausschließlich möglichst dicht am Boden erzeugt wurde.

Ferner sieht die Erfindung vor, dass die Sprühvorrichtung in einer Höhe von mindestes 1,7m oberhalb der Trittfläche angeordnet ist. Da sich die Trittfläche auf der Straßenbaumaschine und damit selbstverständlich oberhalb der Ebene des Bodens befindet, je nach Art des Bedienstands beispielsweise in einer Höhe von 30cm bis 80cm oder sogar (beim Hauptbedienstand) in einer Höhe zwischen 1,5m und 2,5m, ist die Sprühvorrichtung umso höher gegenüber der Ebene des Untergrunds angeordnet. Dies hat den Effekt, dass der Nebel oberhalb des Bedienstands erzeugt wird und vergleichsweise lange im Bereich des Bedienstands verbleibt. Der Nebel sorgt dafür, durch Verdunstungskälte (adiabate Kühlung) die Umgebung zu kühlen. Der Begriff "Kühlsystem" bezieht sich auf diese Form der Kühlung und erfordert keine aktive Kühlung des Kühlmittels selbst, auch wenn dies prinzipiell denkbar wäre. Das Kühlen der Umgebung mittels der Verdunstungskälte macht das Arbeiten für den Bediener weniger anstrengend und erhöht enorm die Konzentrationsfähigkeit des Bedienpersonals, so dass dieses insbesondere an heißen Tagen oder in heißen Regionen weniger schnell erschöpft ist. Darüber hinaus hat die Erfindung den positiven Effekt, dass der Nebel Partikel wie Staub bindet. Entgegen der in der EP 3 276 081 geäußerten Befürchtung wird die Sicht für das Bedienpersonal daher nicht verschlechtert, sondern tatsächlich sogar verbessert.

Vorzugsweise ist die Sprühvorrichtung in einer Höhe von mindestens 1,9m oberhalb der Trittfläche oder in einer Höhe von sogar mindestens 2,1m oberhalb der Trittfläche angeordnet. Damit erreicht der Nebel eine vergleichsweise große Ausdehnung, ohne zu stark verdünnt zu werden.

Vorzugsweise verfügt die Straßenbaumaschine nicht über eine geschlossene Kabine für den Bedienstand. Im Fall einer geschlossenen Kabine würde ansonsten eher eine Klimaanlage zum Einsatz kommen, um die Temperatur abzusenken.

Der Bedienstand kann bei der Erfindung jedoch durchaus ein von einer Tragstruktur getragenes Dach aufweisen, wobei die Sprühvorrichtung am Dach oder an der Tragstruktur montiert ist. Dies hat den Vorteil, dass zum Einen die Sprühvorrichtung auf jeden Fall oberhalb des Kopfes des Bedieners angeordnet ist und die Sicht des Bedieners nicht beeinträchtigt. Außerdem wird die Montage der Sprühvorrichtung durch das Ausnutzen der ohnehin für das Dach vorhandenen Tragstruktur vereinfacht.

In einer zweckmäßigen Variante der Erfindung kann das Kühlsystem modulartig von der Straßenbaumaschine abnehmbar oder an der Straßenbaumaschine montierbar sein. Dies erlaubt es, das Kühlsystem lediglich bei Bedarf einzusetzen, beispielsweise in den Sommermonaten. In der übrigen Zeit nutzt sich das Kühlsystem nicht ab und der vom Kühlsystem eingenommene Platz kann anderweitig verwendet werden.

Denkbar ist es, dass das Kühlsystem von einer Stromversorgung der Straßenbaumaschine mit elektrischer Energie versorgbar ist, beispielsweise von einem an den Motor der Straßenbaumaschine gekoppelten Generator. Dies hat den Vorteil, dass das Kühlsystem keine eigene Energieversorgung benötigt.

Beim Kühlmittel kann es sich vorzugsweise um Wasser handeln, da dieses zum Einen eine hohe Wärmekapazität aufweist und zum Anderen keinerlei Umweltrisiken für den Bediener bedeutet.

In einer Weiterbildung ist der Grad der von der Sprühvorrichtung erzielbaren Vernebelung bzw. eine von der Sprühvorrichtung erzeugte mittlere Tröpfchengröße des Nebels einstellbar. Auf diese Weise kann der Bediener die Kühlleistung beeinflussen.

Denkbar ist es, dass es sich in einer Variante beim Bedienstand um einen Außensteuerstand an einer Einbaubohle der als Straßenfertiger ausgebildeten Straßenbaumaschine handelt. Hier ist die Erfindung besonders vorteilhaft, weil der Bediener am Außensteuerstand besonders nah am heißen Asphalt arbeiten muss.

In diesem Fall kann am Außensteuerstand ein besonderer Aufbau angeordnet sein, der die Sprühvorrichtung trägt, beispielsweise eine vertikale Stange oder ein Gestell.

Zweckmäßig kann es sein, wenn die Sprühvorrichtung in Fahrtrichtung der Straßenbaumaschine weiter vorne als ein Mittelpunkt des Bedienstands angeordnet ist. Dies stellt sicher, dass auch unter Berücksichtigung einer Bewegung der Straßenbaumaschine im Betrieb die größte Konzentration des Nebels im Bereich des am Bedienstand befindlichen Bedieners herrscht.

In einer Variante der Erfindung kann die Sprühvorrichtung nicht nur über eine sondern über mehrere Sprühdüsen verfügen, um den vom Nebel eingenommenen Raum zu vergrößern.

Im Folgenden werden vorteilhafte Ausführungsformen der Erfindung anhand einer Zeichnung näher erläutert. Im Einzelnen zeigen:
Fig. 1 eine Seitenansicht einer erfindungsgemäßen Straßenbaumaschine in Form eines Straßenfertigers und
Fig. 2 ein Ausführungsbeispiel der Erfindung in Form eines Beschickerfahrzeugs.

Gleiche Komponenten sind in den Figuren durchgängig mit gleichen Bezugszeichen bezeichnet.

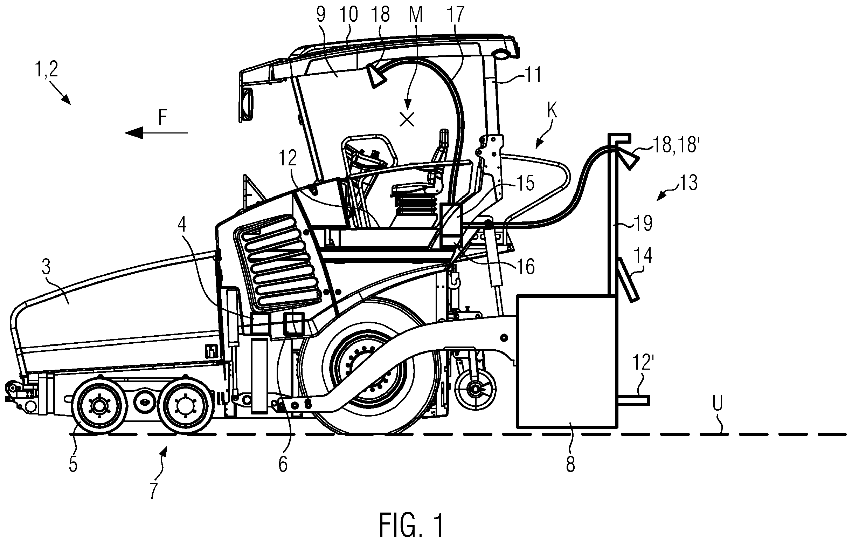

Fig. 1 zeigt eine erfindungsgemäße Straßenbaumaschine 1 in Form eines Straßenfertigers 2 zum Einbauen eines Straßenbelags. In typischer Weise verfügt der Straßenfertiger 2 über einen Gutbunker 3 zur Aufnahme von Einbaumaterial, beispielsweise heißem Asphalt, über einen Motor 4 - beispielsweise einen Verbrennungsmotor - zum Betreiben insbesondere eines Fahrwerks 5, einen vom Motor 4 angetriebenen Generator 6 sowie über eine Zugmaschine 7, die eine Einbaubohle 8 schleppt. Auf der Zugmaschine 7 befindet sich ein Hauptbedienstand 9 für den Straßenfertiger. Der Hauptbedienstand 9 wird überdacht von einem Dach 10, das von einer Tragstruktur 11 getragen wird. Der Hauptbedienstand 9 verfügt über eine Trittfläche 12, auf der ein Bediener stehen kann.

An der Einbaubohle 8 befindet sich ein weiterer Bedienstand, der sogenannte Außensteuerstand 13. Er verfügt über Bedienelemente 14 sowie über eine eigene Trittfläche 12`, auf der ein Bediener stehen kann.

Erfindungsgemäß verfügt der Straßenfertiger 2 ferner über ein Kühlsystem K. Das Kühlsystem umfasst einen Tank 15 zur Aufnahme eines Kühlmittels 16, bei dem es sich beispielsweise um Wasser handeln kann. Das Kühlsystem K kann zum Betreiben einer Pumpe und/oder einer Kühlvorrichtung vom Generator 6 mit elektrischer Energie versorgbar sein. Das Kühlsystem K kann entweder fest am Straßenfertiger 2 installiert oder aber modulartig von der Straßenbaumaschine 1 abnehmbar oder an dieser montierbar sein.

Das Kühlsystem K verfügt neben dem Tank 15 über Leitungen 17, die das Kühlmittel vom Tank zu einer oder mehreren Sprühvorrichtungen 18 führen. Eine Sprühvorrichtung 18 dient zum Zerstäuben des Kühlmittels 16 zu einem feinen Nebel. Zu diesem Zweck kann die Sprühvorrichtung 18 eine oder mehrere Düsen aufweisen, die das Kühlmittel 16 in Tröpfchen zerstäuben. Das Kühlsystem K kann ferner eine Pumpe aufweisen (nicht dargestellt), mittels derer das Kühlmittel 16 vom Tank 15 zu den Sprühvorrichtungen 18 transportiert wird.

Im dargestellten Ausführungsbeispiel ist eine erste Sprühvorrichtung 18 am Dach 10 der Straßenbaumaschine 1 montiert; sie befindet sich dort in einer Höhe von über 1,9m, sogar von über 2,1m oberhalb der Boden- oder Trittfläche 12 des Hauptbedienstands 9. Die Trittfläche 12 selbst befindet sich bereits in einer Höhe von zwischen 1,5m und 2,3m oberhalb eines Untergrunds U, auf dem die Straßenbaumaschine 1 steht. In typischer Fahrtrichtung F der Straßenbaumaschine 1 ist die Sprühvorrichtung 18 am Hauptbedienstand 9 weiter vorne als ein mit M bezeichneter Mittelpunkt des Bedienstands 9 angeordnet. Die Leitungen 17 können durch geeignete Befestiger an der Tragstruktur 11 und am Dach 10 befestigt sein.

Am Außensteuerstand 13 ist ein eigener Aufbau 19 zum Tragen der Sprühvorrichtung 18 vorgesehen, wobei der Aufbau 19 an der Einbaubohle 8 befestigt sein kann. Die Boden- oder Trittfläche 12' des Außenbedienstands 13 befindet sich ihrerseits bereits in einer Höhe von beispielsweise 30cm bis 50cm über dem Untergrund U.

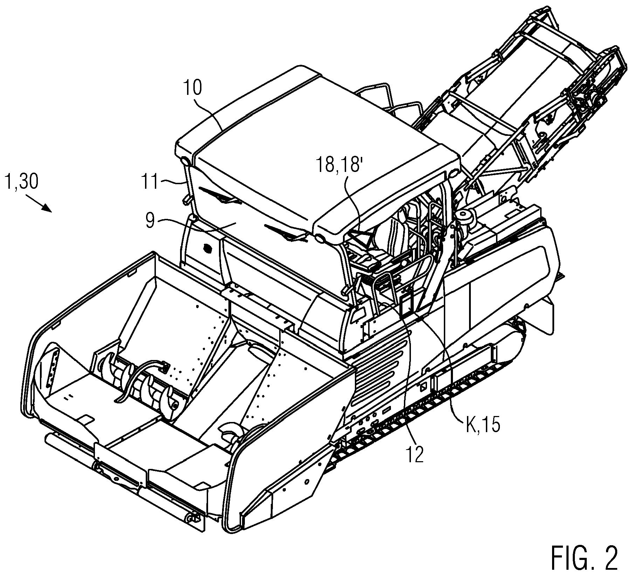

Fig. 2 zeigt in perspektivischer Ansicht ein zweites Ausführungsbeispiel einer Straßenbaumaschine in Form eines Beschickerfahrzeugs 30, mittels dessen ein Straßenfertiger 2 mit Asphalt versorgbar ist. Das Beschickerfahrzeug 30 verfügt über einen Hauptbedienstand 9 analog zum Bedienstand 9 des in Fig. 1 gezeigten Straßenfertigers 2. Lediglich schematisch sind in Fig. 2 der Tank 15 des Kühlsystems K und als Sprühvorrichtung 18 eine am Dach 10 befestigte Sprühdüse 18' angedeutet, sowie die Trittfläche 12 des Bedienstands 9. Ansonsten können die Merkmale des Kühlsystems 2 beim Beschickerfahrzeug denen des anhand von Fig. 1 erläuterten Kühlsystems K entsprechen.

## Patentansprüche

1. Straßenbaumaschine (1) in Form eines Straßenfertigers (2) zum Einbauen eines Straßenbelags oder in Form eines Beschickerfahrzeugs (30) zum Versorgen eines Straßenfertigers (2) mit Einbaumaterial, wobei die Straßenbaumaschine (1) einen Bedienstand (9, 13) mit einer Bodenfläche (12, 12') als Trittfläche für einen Bediener aufweist, ferner mit einem Kühlsystem (K) zum Erzeugen eines Nebels aus einem Kühlmittel (16), wobei das Kühlsystem (K) einen Tank (15) zur Aufnahme des Kühlmittels und eine Sprühvorrichtung (18) zum Zerstäuben des Kühlmittels zu einem Nebel umfasst, **dadurch gekennzeichnet, dass** das Kühlsystem (K) zum Erzeugen eines Nebels im Bereich des Bedienstands (9, 13) konfiguriert ist, wobei die Sprühvorrichtung (18) in einer Höhe von mindestens 1,7 m oberhalb der Trittfläche (12,12') angeordnet ist.

2. Straßenbaumaschine nach Anspruch 1, **dadurch gekennzeichnet, dass** die Sprühvorrichtung (18) in einer Höhe von mindestens 1,9 m oberhalb der Trittfläche (12, 12`) angeordnet ist, vorzugsweise in einer Höhe von mindestens 2,1 m oberhalb der Trittfläche (12, 12') angeordnet ist.

3. Straßenbaumaschine nach einem der vorangehenden Ansprüche, **dadurch gekennzeichnet, dass** der Bedienstand (9, 13) ein von einer Tragstruktur (11) getragenes Dach (10) aufweist, wobei die Sprühvorrichtung (18) am Dach (10) oder an der Tragstruktur (11) montiert ist.

4. Straßenbaumaschine nach einem der vorangehenden Ansprüche, **dadurch gekennzeichnet, dass** das Kühlsystem (K) modulartig von der Straßenbaumaschine (1) abnehmbar oder an der Straßenbaumaschine (1) montierbar ist.

5. Straßenbaumaschine nach Anspruch 4, **dadurch gekennzeichnet, dass** das Kühlsystem (K) von einer Stromversorgung der Straßenbaumaschine (1) mit elektrischer Energie versorgbar ist.

6. Straßenbaumaschine nach einem der vorangehenden Ansprüche, **dadurch gekennzeichnet, dass** das Kühlmittel (16) Wasser umfasst.

7. Straßenbaumaschine nach einem der vorangehenden Ansprüche, **dadurch gekennzeichnet, dass** der Grad der von der Sprühvorrichtung (18) erzielten Vernebelung bzw. eine mittlere Tröpfchengröße des Nebels einstellbar ist.

8. Straßenbaumaschine nach einem der vorangehenden Ansprüche, **dadurch gekennzeichnet, dass** der Bedienstand (9) ein Außensteuerstand (13) an einer Einbaubohle der als Straßenfertiger (2) ausgebildeten Straßenbaumaschine (1) ist.

9. Straßenbaumaschine nach Anspruch 8, **dadurch gekennzeichnet, dass** am Außensteuerstand (13) ein Aufbau (19) angeordnet ist, der die Sprühvorrichtung (18) trägt.

10. Straßenbaumaschine nach einem der vorangehenden Ansprüche, **dadurch gekennzeichnet, dass** die Sprühvorrichtung (18) in Fahrtrichtung der Straßenbaumaschine (1) weiter vorne als ein Mittelpunkt (M) des Bedienstands (9, 13) angeordnet ist.

11. Straßenbaumaschine nach einem der vorangehenden Ansprüche, **dadurch gekennzeichnet, dass** die Sprühvorrichtung (18) in Fahrtrichtung der Straßenbaumaschine (1) weiter vorne als der Bedienstand (9, 13) angeordnet ist.

12. Straßenbaumaschine nach einem der vorangehenden Ansprüche, **dadurch gekennzeichnet, dass** die Sprühvorrichtung (18) mehrere Sprühdüsen (18`) aufweist.

## Claims

1. Road construction machine (1) in the form of a road finisher (2) for paving a road surface or in the form of a feeder vehicle (30) for supplying the road finisher (2) with paving material, wherein the road construction machine (1) comprises an operator stand (9, 13) with a floor surface (12, 12') as a tread surface for an operator, further comprising a cooling system (K) for producing a mist from a cooling agent (16), wherein the cooling system (K) comprises a tank (15) for receiving the cooling agent and a spray apparatus (18) for nebulizing the cooling agent into a mist, **characterized in that** the cooling system (K) is configured to produce a mist in the area of the operator stand (9, 13), wherein the spray apparatus (18) is arranged at a height of at least 1.7 m above the tread surface (12, 12').

2. Road construction machine according to claim 1, **characterized in that** the spray apparatus (18) is arranged at a height of at least 1.9 m above the tread surface (12, 12`), preferably arranged at a height of at least 2.1 m above the tread surface (12, 12').

3. Road construction machine according to any one of the preceding claims, **characterized in that** the operator stand (9, 13) comprises a roof (10) supported by a support structure (11), wherein the spray apparatus (18) is mounted on the roof (10) or on the support structure (11).

4. Road construction machine according to any one of the preceding claims, **characterized in that** the cooling system (K) is modularly detachable from or mounted on the road construction machine (1).

5. Road construction machine according to claim 4, **characterized in that** the cooling system (K) may be supplied with electrical energy from a power supply of the road construction machine (1).

6. Road construction machine according to any one of the preceding claims, **characterized in that** the cooling agent (16) comprises water.

7. Road construction machine according to any one of the preceding claims, **characterized in that** the degree of nebulization of the spray apparatus (18) or an average droplet size of the mist is adjustable.

8. Road construction machine according to any one of the preceding claims, **characterized in that** the operator stand (9) is an external operator stand (13) on a paving screed of the road construction machine (1) designed as a road finisher (2).

9. Road construction machine according to claim 8, **characterized in that** a structure (19) supporting the spray apparatus (18) is arranged on the external operator stand.

10. Road construction machine according to any one of the preceding claims, **characterized in that** the spray apparatus (18) is arranged further forward of a midpoint of the operator stand (9, 13) in the direction of travel of the road construction machine (1).

11. Road construction machine according to any one of the preceding claims, **characterized in that** the spray apparatus (18) is arranged further forward in the direction of travel of the road construction machine (1) than the operator stand (9, 13).

12. Road construction machine according to any one of the preceding claims, **characterized in that** the spray apparatus (18) comprises several spray nozzles (18').

## Revendications

1. Engin de construction routière (1) sous la forme d'un finisseur routier (2) permettant la mise en place d'un revêtement routier ou sous la forme d'un véhicule de chargement (30) permettant d'alimenter un finisseur routier (2) en matériau d'ouvre, dans lequel l'engin de construction routière (1) présente un poste de commande (9, 13) avec une surface de fond (12, 12') faisant office de surface praticable pour un opérateur, comprenant en outre un système de refroidissement (K) permettant de générer un brouillard à partir d'un liquide de refroidissement (16), dans lequel le système de refroidissement (K) comprend un réservoir (15) permettant d'accueillir le liquide de refroidissement et un dispositif de pulvérisation (18) permettant de pulvériser le liquide de refroidissement sous la forme d'un brouillard, **caractérisé en ce que** le système de refroidissement (K) est configuré pour générer un brouillard dans la région du poste de commande (9, 13), dans lequel le dispositif de pulvérisation (18) est agencé à une hauteur d'au moins 1,7 m au-dessus de la surface praticable (12, 12').

2. Engin de construction routière selon la revendication 1, **caractérisé en ce que** le dispositif de pulvérisation (18) est agencé à une hauteur d'au moins 1,9 m au-dessus de la surface praticable (12, 12'), de manière préférée à une hauteur d'au moins 2,1 m au-dessus de la surface praticable (12, 12').

3. Engin de construction routière selon l'une quelconque des revendications précédentes, **caractérisé en ce que** le poste de commande (9, 13) présente un toit (10) supporté par une structure porteuse (11), dans lequel le dispositif de pulvérisation (18) est monté sur le toit (10) ou sur la structure porteuse (11).

4. Engin de construction routière selon l'une quelconque des revendications précédentes, **caractérisé en ce que** le système de refroidissement (K) peut être retiré de l'engin de construction routière (1) ou peut être monté sur l'engin de construction routière (1) de manière modulaire.

5. Engin de construction routière selon la revendication 4, **caractérisé en ce que** le système de refroidissement (K) peut être alimenté en énergie électrique à partir d'une alimentation électrique de l'engin de construction routière (1).

6. Engin de construction routière selon l'une quelconque des revendications précédentes, **caractérisé en ce que** le liquide de refroidissement (16) comprend de l'eau.

7. Engin de construction routière selon l'une quelconque des revendications précédentes, **caractérisé en ce que** le degré de nébulisation obtenu par le dispositif de pulvérisation (18) ou une taille moyenne de gouttelettes du brouillard peut être ajusté(e).

8. Engin de construction routière selon l'une quelconque des revendications précédentes, **caractérisé en ce que** le poste de commande (9) est un poste de commande extérieur (13) au niveau d'une table de réglage de l'engin de construction routière (1) réalisé sous la forme d'un finisseur routier (2).

9. Engin de construction routière selon la revendication 8, **caractérisé en ce qu'**une superstructure (19) supportant le dispositif de pulvérisation (18) est agencée au niveau du poste de commande extérieur (13).

10. Engin de construction routière selon l'une quelconque des revendications précédentes, **caractérisé en ce que** le dispositif de pulvérisation (18) est agencé davantage en avant, dans la direction de déplacement de l'engin de construction routière (1), qu'un centre (M) du poste de commande (9, 13).

11. Engin de construction routière selon l'une quelconque des revendications précédentes, **caractérisé en ce que** le dispositif de pulvérisation (18) est agencé davantage en avant, dans la direction de déplacement de l'engin de construction routière (1), que le poste de commande (9, 13).

12. Engin de construction routière selon l'une quelconque des revendications précédentes, **caractérisé en ce que** le dispositif de pulvérisation (18) présente plusieurs buses de pulvérisation (18').
